# EUROPÄISCHE PATENTSCHRIFT

(11) **EP 0 463 518 B1**
(45) Veröffentlichungstag und Bekanntmachung des Hinweises auf die Patenterteilung: **28.12.1994**
(21) Anmeldenummer: 91109829.1
(22) Anmeldetag: 15.06.1991
(51) Int. Cl.: C08F 210/02, C10L 1/18

(54) **Terpolymerisate des Ethylens, ihre Herstellung und ihre Verwendung als Additive für Mineralöldestillate**
Terpolymers of ethylene, their preparation and their use for mineral oil distillates
Terpolymères de l'éthylène, leur préparation et leur utilisation pour les distillats d'huile minérale

(30) Priorität: 29.06.1990 DE 4020640
(43) Veröffentlichungstag der Anmeldung: 02.01.1992
(73) Patentinhaber: HOECHST AKTIENGESELLSCHAFT, 65926 Frankfurt am Main (DE)
(72) Erfinder: Reimann, Werner, Dr. Dipl.-Chem., W-4100 Duisburg (DE)

(56) Entgegenhaltungen:
- EP-A- 0 111 883
- EP-A- 0 271 738
- EP-A- 0 360 419

## Beschreibung

Die vorliegende Erfindung betrifft Terpolymerisate aus Ethylen, Vinylacetat und i-Butylvinylether mit einer mittleren Molmasse M̅ₙ Vor 500 bis 5.000 g . mol⁻¹. Sie werden mit Erfolg zur Verbesserung der Fließfähigkeit von Mineralölen und Mineralöldestillaten eingesetzt.

Rohöle und durch Destillation von Rohölen gewonnene Mitteldestillate wie Gasöl, Dieselöl oder Heizöl enthalten je nach Herkunft der Rohöle unterschiedliche Mengen langkettiger Paraffine (Wachse) gelöst. Bei niedrigen Temperaturen scheiden sich diese Paraffine als plättchenförmige Kristalle ab, teilweise unter Einschluß von Öl. Hierdurch wird die Fließfähigkeit der Rohöle und der aus ihnen gewonnenen Destillate erheblich beeinträchtigt. Es treten Feststoffablagerungen auf, die häufig zu Störungen bei Gewinnung, Transport und Einsatz der Mineralölprodukte führen. So kommt es in der kalten Jahreszeit z.B. bei Dieselmotoren und Feuerungsanlagen zu Verstopfungen der Filter, die eine sichere Dosierung der Brennstoffe verhindern und schließlich in einer Unterbrechung der Kraftstoff- bzw. Heizmittelzufuhr resultieren. Auch das Fördern der Mitteldestillate durch Rohrleitungen über größere Entfernungen kann im Winter durch das Ausfallen von Paraffinkristallen beeinträchtigt werden.

Es ist bekannt, das unerwünschte Kristallwachstum durch geeignete Zusätze zu unterbinden und damit einem Anstieg der Viskosität der Öle entgegenzuwirken. Solche Zusätze, sie sind unter der Bezeichnung Stockpunktverbesserer bzw. Fließverbesserer bekannt, verändern Größe und Form der Wachskristalle und wirken damit einem Anstieg der Viskosität der Öle entgegen.

Das Fließ- und Kälteverhalten von Mineralölen und Mineralöldestillaten wird durch Angabe des Pour-Points (bestimmt nach DIN 51597) und des Cold-Filter-Plugging-Points (CFPP; bestimmt nach DIN 51 428) beschrieben. Beide Kenngrößen werden in °C gemessen.

Typische Fließverbesserer für Rohöl und Mitteldestillate sind Copolymerisate des Ethylens mit Carbonsäureestern des Vinylalkohols. So setzt man nach der DE 11 47 799 B1 Erdöldestillat-Treib- bzw. -Brennstoffen mit einem Siedebereich zwischen etwa 120 und 400°C öllösliche Mischpolymerisate aus Ethylen und Vinylacetat mit einem Molekulargewicht zwischen etwa 1.000 und 3.000 zu. Als besonders geeignet haben sich Mischpolymerisate erwiesen, die etwa 60 bis 99 Gew.-% Ethylen und etwa 1 bis 40 Gew.-% Vinylacetat enthalten.

Weiterhin ist bekannt, daß solche Copolymerisate der genannten qualitativen Zusammensetzung besonders wirksam sind, die durch radikalische Polymerisation in einem inerten Lösungsmittel bei Temperaturen von etwa 70 bis 130°C und Drücken von 35 bis 2.100 atü hergestellt wurden (DE 19 14 756 B2).

Gegenstand der DE 21 02 469 C2 ist die Verwendung von Ethylen-Copolymerisaten mit einem Molekulargewicht von 500 bis 4.500 und einem Comonomerengehalt von 30 bis 75 Gew.-%. Sie werden erhalten durch gemeinsame Polymerisation von Ethylen und Vinylestern mit 4 bis 10 Kohlenstoffatomen, sowie Acrylsäure- und Methacrylsäureester, die sich von Alkoholen mit 1 bis 12 Kohlenstoffatomen ableiten, unter Ausschluß von Lösungs- und Emulgiermitteln.

Die Wirksamkeit der bekannten Zusatzstoffe zur Verbesserung der Eigenschaften von Mineralölfraktionen ist abhängig von der Herkunft des Mineralöls aus dem sie gewonnen wurden und damit von dessen Zusammensetzung. Additive, die zur Einstellung bestimmter Eigenschaftswerte von Fraktionen eines Rohöls hervorragend geeignet sind, können bei Destillaten von Rohölen anderen Ursprungs zu völlig unbefriedigenden Ergebnissen führen.

Aus wirtschaftlichen Erwägungen ist man daran interessiert, die Ausbeute an Mitteldestillat-Brenn- und Treibstoffen zu erhöhen. Ein Weg, dieses Ziel zu erreichen, ist der Zusatz von höheren Anteilen schweren Gasöls zu Mitteldestillatabmischungen. Eine weitere Möglichkeit, die Mitteldestillatausbeute zu verbessern besteht darin, das Siedeintervall zu vergrößern, also Mitteldestillatfraktionen abzutrennen, deren Siedeende oberhalb 370°C liegt. Beide Verfahren haben einen Anstieg des höhermolekularen n-Paraffinanteils in dem Mitteldestillat-Brenn- bzw. Treibstoff zur Folge.

Die bekannten Zusätze wie Copolymerisate aus Ethylen und Vinylacetat führen in Mitteldestillatfraktionen mit einem Siedeende oberhalb 370°C nur zu einer unbefriedigenden Verbesserung der Fließfähigkeit.

Es bestand daher die Aufgabe Additive mit einem weiten Anwendungsbereich bereitzustellen. Sie sollen die Fließfähigkeit sowohl von Destillaten aus Rohölen unterschiedlichen Ursprungs als auch vor Erdölfraktionen mit einem Siedeende oberhalb 370°C verbessern.

Gegenstand der Erfindung sind Terpolymerisate, die außer Ethyler-Einheiten 5 bis 20 mol-% Vinylacetat-Einheiten und 0,2 bis 5 mol-% i-Butylvinylether-Einheiten enthalten und eine mittlere Molmasse (M̅ₙ) von 500 bis 5.000 g . mol⁻¹ besitzen.

Ein weiterer Gegenstand der Erfindung ist die Verwendung der vorstehend beschriebenen Terpolymerisate zur Verbesserung der Fließfähigkeit von Mineralöldestillaten.

Überraschenderweise haben sich die Terpolymerisate der Erfindung hervorragend zur Verbesserung der Fließfähigkeit von Mineralöldestillaten bewährt. Besonders hervorzuheben ist ihre breite Anwendbarkeit, d.h. ihre Wirksamkeit bei Mineralöldestillaten unterschiedlicher Herkunft, unterschiedlicher Zusammensetzung und unterschiedlichen Siedeverhaltens.

Grundsätzlich können die erfindungsgemäßen Terpolymerisate als Fließverbesserer sowohl in Rohölen als auch in den durch Destillation gewonnenen Weiterverarbeitungsprodukten des Rohöls eingesetzt werden. Bevorzugt ist jedoch ihre Verwendung in Mineralöldestillaten, insbesondere Mineralölmitteldestillaten. Hierunter werden Kohlenwasserstofffraktionen verstanden, die zwischen 150 und 400°C sieden. Beispiele für derartige Rohöldestillate sind Petroleum, leichte Heizöle und Dieselkraftstoff. Von besonderer Bedeutung sind Mitteldestillate wie Heizöl EL und Dieselkraftstoff.

Als Fließverbesserer besonders bewährt haben sich Terpolyrerisate, die neben Ethylen 7 bis 15 mol-% Vinylacetat-Einheiten und 0,5 bis 2 mol-% Butylvinylether-Einheiten enthalten.

Neben der Zusammensetzung ist wesentliches Kriterium der neuen Terpolymerisate die mittlere Molmasse (M̅ₙ). Sie wird im Dampfphasenosmometer unter Verwendung von Toluol als Lösungsmittel gemessen und beträgt 500 bis 5.000 g . mol⁻¹. Als Fließverbesserer werden bevorzugt Terpolymerisate mit einer mittleren Molmasse von 1000 bis 3000 g . mol⁻¹ eingesetzt.

Die bei 140°C gemessene Schmelzviskosität der erfindungsgemäßen Terpolymerisate beträgt 25 bis 500 mPa . s, als Fließverbesserer besonders geeignet sind Terpolymerisate mit einer Schmelzviskosität (bei 140°C) von 50 bis 300 mPa . s.

Zur Herstellung der erfindungsgemäßen Terpolymerisate aus Ethylen, i-Butylvinylether und Vinylacetat geht man von Gemischen der Monomeren aus. i-Butylvinylether ist eine farblose Flüssigkeit, die bei 83°C siedet. Man erhält ihn beispielsweise durch Umsetzung von Ethylen mit i-Butylalkohol in Gegenwart eines Katalysator, der aus einem Edelmetall der VIII. Gruppe des Periodensystems der Elemente und einem Redoxsystem besteht (US-PS 40 57 575).

Die Ausgangsstoffe werden nach bekannten Verfahren (vgl. hierzu z.B. Ullmans Encyclopädie der Technischen Chemie, 4. Auflage, Bd. 19, Seiten 169 bis 178) in Gegenwart von Initiatoren wie Sauersfoff, Peroxiden, Hydroperoxiden oder Azoverbindungen polymerisiert. Die Umsetzung der Monomeren erfolgt bei Drücken zwischen 50 und 700 MPa und bei Temperaturen zwischen 100 und 350°C. Bevorzugt werden Drücke von 150 bis 300 MPa und Temperaturen zwischen 120 und 325°C. Die mittlere Molmasse Mₙ der Terpolymerisate wird durch Variation der Reaktionsparameter Druck und Temperatur bei gegebener Zusammensetzung des Monomerengemisches und durch Zusatz eines Molmassenreglers eingestellt. Als Molmassenregler haben sich z.B. gesättigte oder ungesättigte Kohlenwasserstoffe, Aldehyde oder Ketone bewährt. Sie werden in einer Menge von 0,05 bis 10 Gew.-%, bezogen auf das Monomerengemisch, angewendet. Ein besonders geeigneter Molmassenregler ist Propionaldehyd. Um Polymerisate der beanspruchten Zusammensetzung zu erhalten, setzt man Monomerengemische ein, die außer Ethylen 5 bis 20 mol-% Vinylacetat und 0,6 bis 15 mol-% i-Butylvinylether enthalten. Mit dem gegenüber dem Terpolymerisat höheren i-Butylvinyletheranteil im Monomerengemisch trägt man der unterschiedlichen Polymerisationsgeschwindigkeit der Monomeren Rechnung. Die Polymerisate fallen als farblose Schmelzen an, die bei Raumtemperatur zu wachsartigen Feststoffen erstarren.

Die Polymerisation wird in bekannten Hochdruckreaktoren, z.B. Autoklaven oder Rohrreaktoren, durchgeführt. Lösungsmittel wie aliphatische Kohlenwasserstoffe oder Kohlenwasserstoffgemische, Benzol oder Toluol können im Reaktionsgemisch enthalten sein, wenngleich sich die lösungsmittelfreie Arbeitsweise besonders bewährt hat. Bevorzugt führt man die Polymerisation in Rohrreaktoren durch.

Die erfindungsgemäßen Terpolymerisate werden Mineralöldestillaten in Form von Lösungen, die 40 bis 60 Gew.-% (bezogen auf die Lösung) Terpolymerisat entalten, zugesetzt. Als Lösungsmittel geeignet sind aliphatische oder aromatische Kohlenwasserstoffe oder Kohlenwasserstoffgemische, z.B. Benzinfraktionen und insbesondere Kerosin. Durch die neuen polymeren Verbindungen in ihren rheologischen Eigenschaften verbesserte Mineralöldestillate enthalten 0,001 bis 2, vorzugsweise 0,005 bis 0,5 Gew.-% Terpolymerisat, bezogen auf das Destillat. Das Terpolymerisat kann allein oder auch zusammen mit anderen Additiven verwendet werden, beispielsweise mit Entwachsungshilfsmitteln, Korrosionsinhibitoren, Antioxidantien oder Schlamminhibitoren. Ebenso ist es möglich, Gemische der erfindungsgemäßen Terpolymerisate einzusetzen, deren Komponenten sich hinsichtlich ihrer Zusammensetzung und/oder ihrer mittleren Molmasse unterscheiden.

Die Herstellung der neuen Terpolymerisate und ihre Eigenschaften werden in den nachfolgenden Beispielen 1 bis 3 beschrieben. Weitere Beispiele A bis C betreffen die Verwendung der neuen Terpolymerisate als Additive für Mineralöldestillate. Die Beispiele erläutern die Erfindung lediglich, beschränken sie aber nicht auf die hier wiedergegebenen speziellen Ausführungsformen.

### Beispiele 1 bis 3: Herstellung von Ethylen-/Vinylacetat-/i-Butylvinylether-Terpolymerisaten.

Ethylen, Vinylacetat und i-Butylvinylether werden unter Zusatz von Propionaldehyd als Molmassenregler, in einem Autoklaven polymerisiert. Hierzu wird das Monomerengemisch, dem als Initiator Bis(2-ethylhexyl)-peroxidicarbonat (EHP) gelöst in Testbenzin (0,5 Gew.-% EHP im Lösungsmittel) zugesetzt worden ist, unter Reaktionsdruck in den Reaktor eingespeist. Die Verweilzeit der Reaktanten im Autoklaven beträgt etwa 50 bis 150 sec.

In der nachfolgenden Tabelle 1 sind die Polymerisationsbedingungen und die Eigenschaften der erhaltenen Terpolymerisate zusammengestellt.

Der Vinylacetatgehalt der Terpolymerisate wird nach der Pyrolysemethode ermittelt. Hierzu werden 200 mg des Polymerisats mit 300 mg reinem Polyethylen in einem Pyrolysekolben 5 Minuten auf 450°C erhitzt und die Spaltgase in einem 250 ml-Rundkolben aufgefangen. Die entstandene Essigsäure wird mit NaJ/KJO₃-Lösung umgesetzt und das freigesetzte Jod mit Na₂S₂O₃-Lösung titriert. Der i-Butylvinylethergehalt wird durch H-NMR-Spektroskopie bestimmt. Die Messung der Viskosität erfolgt bei 140°C mit einem Rotovisco System MV II (Hersteller: Fa. Haake, Karlsruhe).

**Tabelle 1**

| Herstellung von Ethylen/Vinylacetat/i-Butylvinylether-Terpolymerisaten | | | | |
|---|---|---|---|---|
| Beispiel Nr. | | 1 | 2 | 3 |
| Druck (MPa) | | 200 | 200 | 200 |
| Temperatur (°C) | | 160 | 160 | 160 |
| Ethylen (kg/h) | | 8,0 | 8,0 | 8,0 |
| Vinylacetat (kg/h) | | 3,56 | 3,17 | 3,87 |
| i-Butylvinylether (kg/h) | | 0,60 | 0,58 | 0,62 |
| Initiator | Art | EHP | EHP | EHP |
| | Menge (ml/h) | 290 | 280 | 320 |
| Regler | Art | Propionaldehyd | Propionaldehyd | Propionaldehyd |
| | Menge (ml/h) | 320 | 310 | 350 |
| Polymeraustrag (kg/h) | | 1,25 | 1,14 | 1,37 |
| Vinylacetatgehalt (Mol-%) | | 12,11 | 10,98 | 13,61 |
| i-Butylvinylethergehalt (Mol-%) | | 0,60 | 0,60 | 0,61 |
| Schmelzviskosität 140°C (mPa.s) | | 230 | 260 | 250 |
| Molmasse M̅ₙ (g.mol⁻¹) | | 1851 | 1880 | 1985 |

### Beispiele A - D: Wirksamkeit der Ethylen-/Vinylacetat-/i-Butylvinylether-Terpolymerisate als Mineralöladditive im Vergleich zu einem Ethylen/Vinylacetat-Copolymerisat.

In den Beispielen A - C (Tabelle 3) wird die Wirksamkeit der nach den Herstellungsbeispielen 1 bis 3 erhaltenen Ethylen-/Vinylacetat-/i-Butylvinylether-Terpolymerisate als Additive für Mineralöle und Mineralöldestillate an Hand des CFPP-Tests (Kalt-Filter-Verstopfungspunkt-Test) beschrieben. Als Vergleich wird in Beispiel D die Wirksamkeit eines handelsüblichen Ethylen-/Vinylacetat-Copolymeren wiedergegeben. Dieses Copolymerisat enthält 12,1 Mol-% Vinylacetat, hat eine Schmelzviskosität (bei 140°C) von 290 mPa.s und ein mittleres Molekulargewicht von 1995. Die Durchführung des Tests erfolgt nach DIN 51428; sie ist auch in J. of the Inst. of Petr., Bd. 52, Juni 1966, Seiten 173 bis 185 publiziert.

Zur Prüfung werden drei Mitteldestillate M1, M2 und M3 eingesetzt, die durch die in Tabelle 2 zusammengestellten Eigenschaften gekennzeichnet sind.

Die Ergebnisse der Beispiele A bis D zeigen, daß die erfindungsgemäßen Terpolymerisate gegenüber den allgemein gebräuchlichen Ethylen-/Vinylacetat-Copolymerisaten eine deutlich verbesserte Wirksamkeit in Mitteldestillatfraktionen mit hohem Siedeende aufweisen. Zudem sind die erfindungsgemäßen Terpolymerisate auch bei Anwendung in geringen Mengen erkennbar effektiver als die bekannten Additive.

**Tabelle 2**

| Charakteristik der Mitteldestillate | | | |
|---|---|---|---|
| | M1 | M2 | M3 |
| 1. Siedeanalyse (nach ASTM D 86; °C | | | |
| Siedeanfang | 184 | 177 | 176 |
| 20 Vol-% | 217 | 243 | 221 |
| 50 Vol-% | 258 | 282 | 265 |
| 90 Vol-% | 350 | 338 | 356 |
| Siedeende | 377 | 360 | 381 |
| 2. CP (°C) | +1 | -2 | +1 |
| 3. CFPP (°C) | -4 | -6 | -5 |

**Tabelle 3**

| Beispiel | Polymerisat | | CFPP°C | | |
|---|---|---|---|---|---|
| | aus Beispiel | Konzentration (ppm) | M1 | M2 | M3 |
| A | 1 | 0 | - 4 | -6 | - 5 |
| | | 100 | -10 | - | - 9 |
| | | 150 | -13 | - | - |
| | | 200 | - | - | - |
| | | 500 | - | - | -16 |
| | | 750 | - | -9 | - |
| B | 2 | 0 | - 4 | -6 | - 5 |
| | | 100 | - 9 | - | - 9 |
| | | 150 | -13 | - | - |
| | | 200 | - | - | - |
| | | 500 | - | - | -17 |
| | | 750 | - | -9 | - |
| C | 3 | 0 | - 4 | -6 | - 5 |
| | | 100 | -12 | - | -11 |
| | | 150 | -14 | - | - |
| | | 200 | - | - | - |
| | | 500 | - | - | -18 |
| | | 750 | - | -8 | - |
| D | Copolymerisat | 0 | - 4 | -6 | - 5 |
| | | 100 | - 8 | - | - 6 |
| | | 150 | -13 | - | - |
| | | 200 | - | - | - |
| | | 500 | - | - | - 8 |
| | | 750 | - | -8 | - |

## Patentansprüche

1. Terpolymerisate, die außer Ethylen-Einheiten 5 bis 20 mol-% Vinylacetat-Einheiten und 0,2 bis 5 mol-% i-Butylvinylether-Einheiten enthalten und eine mittlere Molmasse (Mₙ) von 500 bis 5.000 g . mol⁻¹ besitzen.

2. Verfahren zur Herstellung von Terpolymerisaten nach Anspruch 1, dadurch gekennzeichnet, daß Gemische der Monomeren bei Drücken zwischen 50 und 700 MPa, vorzugsweise 150 bis 300 MPa und bei Temperaturen zwischen 100 und 350°C, vorzugsweise 120 und 325°C in Gegenwart eines Initiators und unter Zusatz eines Molmassenreglers polymerisiert werden.

3. Verfahren zur Herstellung vor Terpolymerisaten nach Anspruch 2, dadurch gekennzeichnet, daß man den Molmassenregler in einer Menge von 0,05 bis 10 Gew.-%, bezogen auf das Monomerengemisch, anwendet.

4. Verfahren zur Herstellung von Terpolymerisaten nach Anspruch 2 oder 3, dadurch gekennzeichnet, daß der Molmassenregler Propionaldehyd ist.

5. Verwendung von Terpolymerisaten nach Anspruch 1 zur Verbesserung der Fließfähigkeit von Mineralöldestillaten, insbesondere Mineralölmitteldestillaten.

6. Verwendung von Terpolymerisaten nach Anspruch 5, dadurch gekennzeichnet, daß sie neben Ethylen 7 bis 15 mol-% Vinylacetat-Einheiten und 0,5 bis 2 mol-% Butylvinylether-Einheiten enthalten.

7. Verwendung von Terpolymerisaten nach Anspruch 5 oder 6, dadurch gekennzeichnet, daß ihre mittlere Molmasse 1.000 bis 3.000 g . mol⁻¹ ist.

8. Verwendung von Terpolymerisaten nach einen oder mehreren der Ansprüche 5 bis 7, dadurch gekennzeichnet, daß ihre bei 140°C gemessene Schmelzvisnosität 25 bis 500 mPa . s, vorzugsweise 50 bis 300 mPa . s beträgt.

9. Verwendung von Terpolymerisaten nach einem oder mehreren der Ansprüche 5 bis 8, dadurch gekennzeichnet, daß sie den Minerlöldestillaten in einer Menge von 0,001 bis 2, vorzugsweise 0,005 bis 0,5 Gew.-% bezogen auf das Destillat, zugesetzt werden.

10. Mineralöldestillate, die 0,001 bis 2 Gew.-% (bezogen auf Destillat) eines Terpolymerisats nach Anspruch 1 gelöst enthalten.

## Claims

1. A terpolymer which, in addition to ethylene units, contains 5 to 20 mol % of vinyl acetate units and 0.2 to 5 mol % of isobutyl vinyl ether units and has a mean molecular weight (M̅ₙ) of 500 to 5,000 g . mol⁻¹.

2. A process for the preparation of a terpolymer as claimed in claim 1, wherein a mixture of the monomers is polymerized at pressures between 50 and 700 MPa, preferably 150 to 300 MPa, and at temperatures between 100 and 350°C, preferably 120 and 325°C, in the presence of an initiator and with addition of a molecular weight regulator.

3. A process for the preparation of a terpolymer as claimed in claim 2, wherein the molecular weight regulator is used in an amount of 0.05 to 10% by weight, based on the monomer mixture.

4. A process for the preparation of a terpolymer as claimed in claim 2 or 3, wherein the molecular weight regulator is propionaldehyde.

5. The use of a terpolymer as claimed in claim 1 for improving the flow of mineral oil distillates, in particular mineral oil middle distillates.

6. The use of a terpolymer as claimed in claim 5, which contains, in addition to ethylene, 7 to 15 mol % of vinyl acetate units and 0.5 to 2 mol % of butyl vinyl ether units.

7. The use of a terpolymer as claimed in claim 5 or 6, wherein the mean molecular weight of said terpolymer is 1,000 to 3,000 g . mol⁻¹.

8. The use of a terpolymer as claimed in one or more of claims 5 to 7, wherein its melt viscosity measured at 140°C is 25 to 500 mPa.s, preferably 50 to 300 mPa.s.

9. The use of a terpolymer as claimed in one or more of claims 5 to 8, which is added to the mineral oil distillates in an amount of 0.001 to 2, preferably 0.005 to 0.5, % by weight, based on the distillate.

10. A mineral oil distillate which contains 0.001 to 2% by weight (based on the distillate) of a terpolymer as claimed in claim 1 in dissolved form.

## Revendications

1. Terpolymères qui contiennent, outre des motifs d'éthylène, 5 à 20 mol% de motifs d'acétate de vinyle et 0,2 à 5 mol% de motifs d'oxyde d'isobutyle et de vinyle et ont une masse molaire moyenne (M̅ₙ) de 500 à 5 000 g.mol⁻¹.

2. Procédé pour la fabrication de terpolymères selon la revendication 1, caractérisé en ce que l'on polymérise des mélanges des monomères sous des pressions entre 50 et 700 MPa, de préférence de 150 à 300 MPa et à des températures entre 100 et 350°C, de préférence 120 et 325°C, en présence d'un initiateur et avec addition d'un régulateur de masse molaire.

3. Procédé pour la fabrication de terpolymères selon la revendication 2, caractérisé en ce que l'on utilise le régulateur de masse molaire en quantité de 0,05 à 10 % en poids par rapport au mélange de monomères.

4. Procédé pour la fabrication de terpolymères selon la revendication 2 ou 3, caractérisé en ce que le régulateur de masse molaire est le propionaldéhyde.

5. Utilisation de terpolymères selon la revendication 1 pour l'amélioration de la fluidité de distillats d'huiles minérales, en particulier de distillats moyens d'huiles minérales.

6. Utilisation de terpolymères selon la revendication 5, caractérisée en ce qu'ils contiennent, outre l'éthylène, 7 à 15 mol% de motifs d'acétate de vinyle et 0,5 à 2 mol% de motifs d'oxyde d'isobutyle et de vinyle.

7. Utilisation de terpolymères selon la revendication 5 ou 6, caracté-risée en ce que leur masse molaire moyenne est de 1 000 à 3 000 g.mol⁻¹.

8. Utilisation de terpolymères selon une ou plusieurs des revendications 5 à 7, caractérisée en ce que leur viscosité à l'état fondu mesurée à 140°C est de 25 à 500 mPa.s, de préférence de 50 à 300 mPa.s.

9. Utilisation de terpolymères selon une ou plusieurs des revendications 5 à 8, caractérisée en ce qu'ils sont ajoutés aux distillats d'huiles minérales en quantité de 0,001 à 2 % en poids, de préférence de 0,005 à 0,5 % en poids, par rapport au distillat.

10. Distillats d'huiles minérales, qui contiennent en solution 0,001 à 2 % en poids (par rapport au distillat) d'un terpolymère selon la revendication 1.
